# FASCICULE DE BREVET EUROPEEN

(11) **EP 4 136 706 B1**
(45) Date de publication et mention de la délivrance du brevet: **14.02.2024**
(21) Numéro de dépôt: 21711286.1
(22) Date de dépôt: 16.03.2021
(51) Int. Cl.: H01Q 1/32, B62D 35/00

(54) **VÉHICULE DOTÉ D'UNE ANTENNE V2X SUR SA FAÇADE ARRIÈRE**
FAHRZEUG MIT EINER V2X-ANTENNE AUF SEINER RÜCKWAND
VEHICLE PROVIDED WITH A V2X ANTENNA ON ITS REAR PANEL

(30) Priorité: 17.04.2020 FR 2003872
(43) Date de publication de la demande: 22.02.2023
(73) Titulaire: RENAULT s.a.s., 92100 Boulogne-Billancourt (FR)
(72) Inventeur: SEIGNEUR, Quentin, 78000 VERSAILLES (FR)
(86) Numéro de dépôt international: PCT/EP2021/056662
(87) Numéro de publication internationale: WO 2021/209210

(56) Documents cités:
- EP-A1- 3 531 503
- WO-A1-2011/018566
- WO-A1-2017/205551
- CN-U- 207 250 702

## Description

La présente invention concerne un véhicule doté d'une antenne V2X sur sa façade arrière.

Afin de bien comprendre le positionnement des différentes pièces impliquées dans un véhicule selon l'invention, la description est réalisée en faisant référence à un repère orthonormé direct XYZ lié à ce véhicule et dans lequel X est un axe longitudinal avant-arrière du véhicule orienté vers l'arrière, Y est un axe transversal orienté vers la droite du véhicule et Z est un axe vertical dirigé vers le haut.

La mise en oeuvre d'antennes V2X (de l'anglais *Vehicle to everything*) sur un véhicule autonome, permet audit véhicule de "voir" ce qu'il se passe sur la route au-delà des 250 mètres de portée de leurs capteurs, en communiquant avec les autres véhicules sur la route, et/ou avec un centre de contrôle smart city, et/ou avec une infrastructure connectée (feux, ronds-points, carrefours...). Il faut télécharger en permanence un horizon électronique pour être au courant d'une modification sur la route. Ces antennes sont directives, si bien qu'il s'avère nécessaire d'en placer un peu partout autour du véhicule pour balayer tout l'environnement du véhicule sur 360°. Afin d'être e fficaces, ces antennes doivent être placées proches de la peau extérieure du véhicule.

Ces antennes sont exclusivement à l'usage des véhicules autonomes, pour lesquels l'environnement routier doit être connu à chaque instant avec précision, pour permettre aux ordinateurs embarqués dans ces véhicules d'adapter les conditions de roulage de ceux-ci à cet environnement.

La demande CN207250702 décrit un véhicule dans lequel sont placées plusieurs antennes directives afin de connaitre l'environnement routier du véhicule. Ce document ne décrit aucune antenne directive qui serait placée sur une façade arrière du véhicule. Le document WO 2017/205551 A1 divulgue un véhicule selon le préambule de la revendication 1.

Un véhicule selon l'invention dispose d'une antenne V2X apte à couvrir une zone située à l'arrière du véhicule, sans avoir à modifier la structure dudit véhicule.

Que ce soit dans la description ou dans les revendications, les termes « antenne V2X » et « antenne » sont équivalents et désignent le même objet.

L'invention a pour objet un véhicule automobile dotée d'une façade arrière s'étendant selon un axe transversal Y du véhicule.

Selon l'invention, ladite façade arrière est bordée à au moins l'une de ses extrémités considérés le long dudit axe Y par un déflecteur aérodynamique latéral, au moins une antenne V2X étant placée dans un espace libre ménagé entre ledit déflecteur aérodynamique et un élément de structure du véhicule. Il a en effet été découvert qu'il subsistait un espace libre entre un déflecteur aérodynamique arrière et un élément de structure du véhicule prévu pour accueillir ledit déflecteur. En effet, les véhicules disposent de moins en moins d'espace disponible, et l'un des seuls espaces encore inoccupés de la façade arrière du véhicule, se situe entre un déflecteur aérodynamique arrière et un élément de structure dudit véhicule, qui est coiffé par ledit déflecteur. Il s'avère que cet espace est suffisant pour loger une antenne V2X, sans avoir à modifier la position du déflecteur et/ou sans avoir à retoucher l'élément de structure du véhicule qui est coiffé par le déflecteur aérodynamique. Avantageusement, le déflecteur aérodynamique est fixé par clippage à l'élément de structure du véhicule. Selon une variante de réalisation d'un véhicule selon l'invention, la façade arrière est bordée par deux déflecteurs aérodynamiques latéraux se retrouvant chacun à une extrémité de la façade arrière considérée suivant un axe transversal Y du véhicule. Pour cette configuration, une antenne V2X est logée derrière chacun des deux déflecteurs aérodynamiques. L'antenne V2X peut indifféremment être fixé au déflecteur aérodynamique ou à l'élément de structure qui est coiffé par ledit déflecteur.

Selon une caractéristique possible de l'invention, le déflecteur est une pièce de faible épaisseur s'inscrivant dans un plan sensiblement vertical et longitudinal XZ du véhicule. Le terme « sensiblement » signifie vertical à plus ou moins 10°et longitudinal à plus ou moins 10°. Un tel déflecteur est profilé pour améliorer l'aérodynamique du véhicule, et colle donc au plus près de la carrosserie du véhicule en évitant de constituer une protubérance susceptible de générer des mouvements d'air tourbillonnaires. Il est important de préciser que l'insertion de l'antenne V2X derrière le déflecteur aérodynamique n'engendre aucune modification de l'orientation dudit déflecteur sur le véhicule.

Selon une caractéristique possible de l'invention, l'antenne V2X est orientée dans l'espace libre ménagé entre l'élément de structure et le déflecteur aérodynamique de façon à couvrir une zone située derrière le véhicule. L'antenne V2X étant directive, il faut la placer avec rigueur et précision derrière le déflecteur, afin que ladite antenne puisse couvrir une zone située derrière le véhicule.

Selon une caractéristique possible de l'invention, le déflecteur aérodynamique possède une doublure fixée à une surface interne du déflecteur, et l'antenne V2X est fixée à cette doublure. Il est plus facile de légèrement modifier la structure de la doublure pour qu'elle puisse accueillir l'antenne, que celle du déflecteur aérodynamique pour l'adapter à la forme et aux dimensions de l'antenne. En effet, la moindre modification structurelle du déflecteur pourrait avoir des conséquences directes sur l'aérodynamisme du véhicule. Avantageusement la doublure est réalisée en matière plastique, et préférentiellement elle est fixée au déflecteur par clippage.

Selon une caractéristique possible de l'invention, l'antenne V2X est fixée par clippage à la doublure du déflecteur aérodynamique. Il s'agit d'un moyen de fixation simple, ne nécessitant ni un outillage particulier, ni des manipulations compliquées.

Selon une caractéristique possible de l'invention, la doublure possède deux glissières parallèles, et l'antenne V2X est placée entre lesdites deux glissières. L'espace entre les glissières matérialise l'endroit précis de la doublure où sera fixée l'antenne. Les glissières agissent donc comme des éléments de guidage et de prépositionnement de ladite antenne V2X. Avantageusement, chaque glissière est matérialisée par une barre rectiligne possédant une surface externe lisse afin que l'antenne puisse être introduite puis déplacée entre lesdites glissières sans difficulté.

Selon une caractéristique possible de l'invention, les deux glissières possèdent chacune un bord d'extrémité replié, destiné à venir au contact de l'antenne pour la retenir contre la doublure une fois qu'elle a été placée entre lesdites glissières. Ces deux bords repliés agissent comme des bras de retenue, empêchant l'antenne de s'écarter de la doublure. Avantageusement, chaque bord replié établit un contact surfacique, c'est-à-dire étalé, avec l'antenne.

Selon une caractéristique possible de l'invention, la doublure possède au moins une patte de fixation déformable élastiquement s'étendant entre les deux glissières, l'antenne étant placée entre les deux glissières en étant positionnée entre les deux bords repliés et ladite au moins une patte de fixation, ladite patte de fixation ayant tendance par relaxation à repousser l'antenne V2X contre lesdits bords repliés. De cette manière, la patte de fixation agit comme un organe de maintien de l'antenne contre les bords repliés des glissières et c'est grâce à cette patte que l'antenne est solidement solidarisée à la doublure du déflecteur. L'introduction de l'antenne entre les deux glissières entraine une déformation élastique de la patte de fixation, qui en voulant retrouver sa configuration de repos c'est-à-dire une configuration sans aucune contrainte, exerce une pression sur l'antenne en la repoussant vers les deux bords repliés des glissières.

Selon une caractéristique possible de l'invention, la patte de fixation présente une extrémité d'accroche destinée à retenir l'antenne entre les deux glissières. Une fois que l'antenne a totalement dépassé l'extrémité d'accroche de la patte de fixation en phase de déformation, ladite extrémité se rabat brutalement contre l'antenne, car la patte de fixation se relaxe après avoir été déformée élastiquement lors du passage de l'antenne. Cette extrémité rabattue correspond à une butée empêchant l'antenne de ressortir de l'espace situé entre les deux glissières, dans le sens inverse de celui par lequel elle a été insérée entre lesdites deux glissières.

L'invention a pour autre objet un procédé de montage d'une antenne V2X pour la réalisation d'un véhicule conforme à l'invention.

Selon l'invention, le procédé comprend les étapes suivantes :
- Une étape de fourniture d'un déflecteur doté d'une doublure,
- Une étape de coulissement de l'antenne V2X entre les deux glissières de la doublure, entrainant une déformation élastique de la patte de fixation,
- Une étape de poursuite puis d'arrêt du coulissement lorsque l'antenne V2X a dépassé l'extrémité d'accroche de la patte, ladite extrémité se rabattant alors contre ladite antenne V2X par relaxation, pour l'empêcher de coulisser en sens inverse et pour maintenir ladite antenne contre les bords repliés des deux glissières,
- Une étape de fixation du déflecteur comprenant l'antenne V2X à l'emplacement prévu sur le véhicule.

On donne ci-après, une description détaillée d'un mode de réalisation préféré d'un véhicule selon l'invention, en se référant aux figures suivantes :
[Fig. 1] représente une vue en perspective du dessus d'une façade arrière d'un véhicule selon l'invention,
[Fig. 2] représente une vue en perspective sous un autre angle de la façade arrière de la figure 1,
[Fig. 3] représente une vue en perspective d'un déflecteur aérodynamique et de sa doublure d'un véhicule selon l'invention,
[Fig. 4] représente une vue en perspective d'une zone de la doublure du déflecteur de la figure 4.

Un véhicule selon l'invention est préférentiellement un véhicule autonome pour lequel aucun conducteur n'est requis. En effet ce type de véhicule est piloté automatiquement au moyen d'un calculateur embarqué, recueillant en temps réel un certain nombre d'informations sur l'environnement du véhicule afin d'adapter le roulage du véhicule à cet environnement. Ces informations sont notamment recueillies par l'intermédiaire d'antennes V2X (de l'anglais *Vehicle to everything*) fixées au véhicule, permettant audit véhicule de "voir" ce qu'il se passe sur la route au-delà des 250 mètres de portée de leurs capteurs, en communiquant avec les autres véhicules sur la route, et/ou avec un centre de contrôle smart city, et/ou avec une infrastructure connectée (feux, ronds-points, carrefours...). Il faut télécharger en permanence un horizon électronique pour être au courant d'une modification sur la route. Ces antennes V2X sont directives, si bien qu'il s'avère nécessaire d'en placer un peu partout autour du véhicule pour balayer tout l'environnement du véhicule sur 360°. Afin d'être e fficaces, ces antennes V2X doivent être placées proches d'une peau extérieure du véhicule.

Or, un problème rencontré régulièrement avec ce type de véhicule est le manque de place disponible pour pouvoir installer ces antennes V2X sur le véhicule, et en particulier, pour installer une antenne V2X couvrant une zone arrière située derrière ledit véhicule.

Un véhicule 1 selon l'invention est configuré pour recevoir une antenne V2X 2 couvrant une zone située derrière ledit véhicule 1.

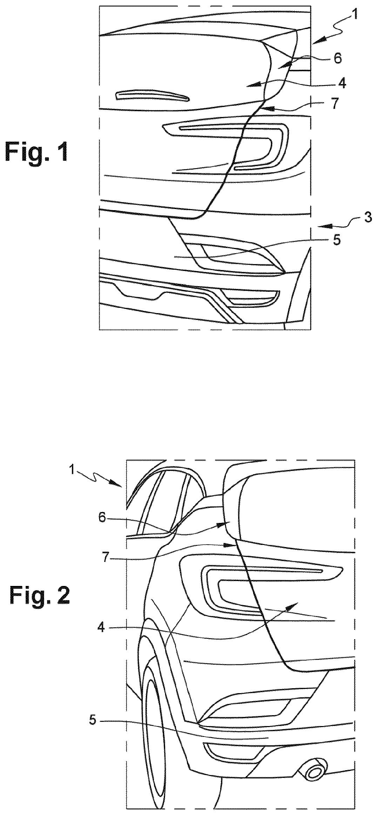

En se référant aux figures 1 et 2, une façade arrière 3 d'un véhicule 1 selon l'invention comprend un hayon 4, un pare-chocs 5 et deux déflecteurs aérodynamique 6 fixés à un élément de structure du véhicule et bordant latéralement le hayon 4. Plus précisément, le hayon 4 présente deux bords 7 d'extrémité alignés selon un axe transversal Y du véhicule 1, et les deux déflecteurs 6 couvrent chacun l'un des deux bords 7 d'extrémité dudit hayon 4.

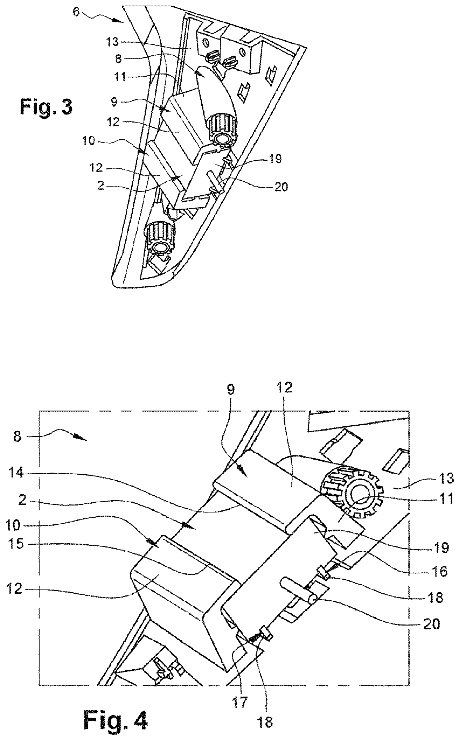

En se référant aux figures 2 et 3, chaque déflecteur 6 est une pièce sensiblement plane et de faible épaisseur, et ayant une forme sensiblement triangulaire. Les deux déflecteurs 6 sont fixés au véhicule de manière à ce qu'ils soient parallèles entre eux, et s'étendent dans un plan sensiblement vertical et longitudinal XZ du véhicule. Le terme « sensiblement » signifie vertical à plus ou moins 10°et longitudinal à plus ou moins 10°.

En se référant à la figure 3, le déflecteur 6 comporte une doublure 8, préférentiellement réalisée en matière plastique et s'étendant le long dudit déflecteur 6 sur au moins 80% de sa longueur totale. Avantageusement, cette doublure 8 est fixée par clippage au déflecteur 6.

En se référant aux figures 2 et 3, la doublure 8 de l'un des deux déflecteurs 6, comprend deux glissières 9, 10 parallèles venues de matière avec ladite doublure 8. Chaque glissière 9, 10 comprend un premier segment 11 plan et un deuxième segment 12 plan, ledit deuxième segment 12 prolongeant ledit premier segment 11 en étant perpendiculaire à celui-ci. Plus précisément, les deux premiers segments 11 prennent naissance sur une face 13 plane de la doublure 8 en étant parallèles entre eux, et les deux deuxièmes segments 12 sont coplanaires et s'étendent l'un vers l'autre. De cette manière, la distance séparant les bords 14, 15 parallèles des deux deuxièmes segments 12, les plus proches l'un de l'autre, est inférieure à la distance séparant les deux premiers segments 11 des deux glissières 9, 10. Les deux deuxièmes segments 12 saillent de la face plane 13 de la doublure 8 en s'étendant parallèlement à ladite face plane 13. La face plane 13 de la doublure 8 sur laquelle prennent naissance les deux premiers segments 11 possèdent deux pattes de fixation 16, 17 déformables élastiquement. Ces deux pattes de fixation 16, 17 sont parallèles entre elles et sont placées entre lesdits deux premiers segments 11 en s'étendant parallèlement à ceux-ci. Ces deux pattes de fixation 16, 17 sont placées au même niveau que la face plane 13 en étant légèrement inclinées par rapport à celle-ci. Les deux pattes de fixation 16, 17 possèdent chacune une extrémité d'accroche 18 profilée apte à servir de butée pour l'antenne V2X 2, une fois que celle-ci a pénétré dans l'espace délimité par les deux glissières 9, 10.

L'antenne V2X 2 est un boitier de forme sensiblement parallélépipédique possédant une face 19 de laquelle émerge une tige 20 faisant office d'antenne. L'antenne V2X 2 est fixée à la doublure 8 du déflecteur aérodynamique 6, en étant insérée entre les premiers segments 11 des deux glissières 9, 10 et entre les deux deuxièmes segments 12 des deux glissières 9, 10, et les deux pattes de fixation 16, 17, dont les extrémités d'accroche 18 empêchent l'antenne V2X 2 de coulisser hors des deux premiers segments 11. Les deux pattes de fixation 16, 17 qui ont été déformées lors de l'introduction de l'antenne V2X 2 entre les deux glissières 9, 10, ont tendance en se relaxant, à plaquer ladite antenne V2X 2 contre les deux deuxièmes segments 12 des deux glissières 9, 10.

Un procédé de montage d'une antenne V2X pour la réalisation d'un véhicule conforme à l'invention, comprend les étapes suivantes :
- Une étape de coulissement de l'antenne V2X 2 entre les deux premiers segments 11 des deux glissières 9, 10 de la doublure 8, et entre les deuxièmes segments 12 desdites glissières 9, 10 et les deux pattes de fixation 16, 17, entrainant une déformation élastique desdites deux pattes de fixation 16, 17,
- Une étape de poursuite puis d'arrêt du coulissement lorsque l'antenne V2X 2 a dépassé les extrémités d'accroche 18 des deux pattes de fixation 16, 17, lesdites extrémités d'accroche 18 se rabattant alors contre l'antenne V2X 2 par relaxation, pour l'empêcher de coulisser en sens inverse. Les deux pattes de fixation 16, 17 ont tendance par relaxation, car elles ont été préalablement déformées par l'introduction de l'antenne V2X 2 entre les deux glissières 9, 10, à repousser ladite antenne 2 contre les deux deuxièmes segments 12. Ces deux pattes de fixation 16, 17 agissent comme des éléments de maintien de l'antenne V2X dans le déflecteur 6 et comme des éléments de stabilisation de ladite antenne V2X dans ledit déflecteur 6.
- Une étape de fixation du déflecteur 6 comprenant l'antenne V2X 2, à l'emplacement prévu sur le véhicule.

Le véhicule possède deux déflecteurs aérodynamiques 6 et au moins l'un desdits deux déflecteurs 6 loge une antenne V2X.

## Revendications

1. Véhicule (1) doté d'une façade arrière (3) s'étendant selon un axe transversal Y du véhicule, ladite façade arrière (3) comportant au moins une antenne V2X (2), **caractérisé en ce que** ladite façade arrière (3) est bordée à au moins l'une de ses extrémités considérés le long dudit axe Y par un déflecteur (6) aérodynamique latéral, et **en ce que** l'au moins une antenne V2X (2) est placée dans un espace libre ménagé entre ledit déflecteur (6) aérodynamique et un élément de structure du véhicule (1).

2. Véhicule selon la revendication 1, **caractérisé en ce que** le déflecteur (6) est une pièce de faible épaisseur s'inscrivant dans un plan sensiblement vertical et longitudinal XZ du véhicule.

3. Véhicule selon l'une quelconque des revendications 1 ou 2, **caractérisé en ce que** l'antenne V2X (2) est orientée dans l'espace libre ménagé entre l'élément de structure et le déflecteur (6) aérodynamique de façon à couvrir une zone située derrière le véhicule (1).

4. Véhicule selon l'une quelconque des revendications 1 à 3, **caractérisé en ce que** le déflecteur (6) aérodynamique possède une doublure (8) fixée à une surface interne du déflecteur (6), et **en ce que** l'antenne V2X (2) est fixée à cette doublure (8).

5. Véhicule selon la revendication 4, **caractérisé en ce que** l'antenne V2X (2) est fixée par clippage à la doublure (8) du déflecteur (6) aérodynamique.

6. Véhicule selon l'une quelconque des revendications 4 ou 5, **caractérisé en ce que** la doublure (8) possède deux glissières parallèles (9, 10), et **en ce que** l'antenne V2X (2) est placée entre lesdites deux glissières (9, 10).

7. Véhicule selon la revendication 6, **caractérisé en ce que** les deux glissières (9, 10) possèdent chacune un bord (12) d'extrémité replié, destiné à venir au contact de l'antenne V2X (2) pour la retenir contre la doublure (8) une fois qu'elle a été placée entre lesdites glissières (9, 10).

8. Véhicule selon la revendication 7, **caractérisé en ce que** la doublure (8) possède au moins une patte de fixation (16, 17) déformable élastiquement s'étendant entre les deux glissières, et **en ce que** l'antenne (2) est placée entre les deux glissières (9, 10) en étant positionnée entre les deux bords (12) repliés et ladite au moins une patte de fixation (16, 17), ladite patte de fixation (16, 17) ayant tendance par relaxation à repousser l'antenne V2X (2) contre lesdits bords (12) repliés.

9. Véhicule selon la revendication 8, **caractérisé en ce que** la patte de fixation (16, 17) présente une extrémité d'accroche (18) destinée à retenir l'antenne V2X (2) entre les deux glissières (9, 10).

10. Procédé de montage d'une antenne V2X (2) pour la réalisation d'un véhicule (1) conforme à la revendication 9, **caractérisé en ce qu'**il comprend les étapes suivantes :
- Une étape de fourniture d'un véhicule (1) conforme à la revendication 9, à l'exception du fait que l'antenne V2X (2) et le déflecteur (6) se trouvent dans un état non encore monté,
- Une étape de coulissement de l'antenne V2X (2) entre les deux glissières (9, 10) de la doublure (8), entrainant une déformation élastique de la patte de fixation (16, 17),
- Une étape de poursuite puis d'arrêt du coulissement lorsque l'antenne V2X (2) a dépassé l'extrémité d'accroche (18) de la patte de fixation (16, 17), ladite extrémité (18) se rabattant alors contre l'antenne V2X (2) par relaxation, pour l'empêcher de coulisser en sens inverse, et pour maintenir ladite antenne (2) contre les bords repliés (12) des deux glissières (9, 10),
- Une étape de fixation du déflecteur (6) comprenant l'antenne V2X (2) à l'emplacement prévu sur le véhicule (1).

## Patentansprüche

1. Fahrzeug (1), versehen mit einer Rückfront (3), die sich gemäß einer Querachse Y des Fahrzeugs erstreckt, wobei die Rückfront (3) mindestens eine V2X-Antenne (2) aufweist, **dadurch gekennzeichnet, dass** die Rückfront (3) an mindestens einem ihrer betrachteten Enden entlang der Y-Achse von einem seitlichen aerodynamischen Spoiler (6) umrandet wird, und dass die mindestens eine V2X-Antenne (2) in einem freien Raum platziert ist, der zwischen dem aerodynamischen Spoiler (6) und einem Strukturelement des Fahrzeugs (1) ausgespart ist.

2. Fahrzeug nach Anspruch 1, **dadurch gekennzeichnet, dass** der Spoiler (6) ein Bauteil geringer Dicke ist, das sich in eine im Wesentlichen senkrechte und längs verlaufende Ebene XZ des Fahrzeugs einpasst.

3. Fahrzeug nach einem der Ansprüche 1 oder 2, **dadurch gekennzeichnet, dass** die V2X-Antenne (2) im zwischen dem Strukturelement und dem aerodynamischen Spoiler (6) ausgesparten freien Raum so ausgerichtet ist, dass sie eine hinter dem Fahrzeug (1) befindliche Zone abdeckt.

4. Fahrzeug nach einem der Ansprüche 1 bis 3, **dadurch gekennzeichnet, dass** der aerodynamische Spoiler (6) ein Futter (8) besitzt, das an einer Innenfläche des Spoilers (6) befestigt ist, und dass die V2X-Antenne (2) an diesem Futter (8) befestigt ist.

5. Fahrzeug nach Anspruch 4, **dadurch gekennzeichnet, dass** die V2X-Antenne (2) durch Einklinken am Futter (8) des aerodynamischen Spoilers (6) befestigt wird.

6. Fahrzeug nach einem der Ansprüche 4 oder 5, **dadurch gekennzeichnet, dass** das Futter (8) zwei parallele Gleitschienen (9, 10) besitzt, und dass die V2X-Antenne (2) zwischen den zwei Gleitschienen (9, 10) platziert ist.

7. Fahrzeug nach Anspruch 6, **dadurch gekennzeichnet, dass** die zwei Gleitschienen (9, 10) je einen umgebogenen Endrand (12) besitzen, der dazu bestimmt ist, mit der V2X-Antenne (2) in Kontakt zu kommen, um sie gegen das Futter (8) zu halten, wenn sie zwischen den Gleitschienen (9, 10) platziert wurde.

8. Fahrzeug nach Anspruch 7, **dadurch gekennzeichnet, dass** das Futter (8) mindestens eine elastisch verformbare Befestigungslasche (16, 17) besitzt, die sich zwischen den zwei Gleitschienen erstreckt, und dass die Antenne (2) zwischen den zwei Gleitschienen (9, 10) platziert wird, indem sie zwischen den zwei umgebogenen Rändern (12) und der mindestens einen Befestigungslasche (16, 17) positioniert wird, wobei die Befestigungslasche (16, 17) die Tendenz hat, durch Entspannung die V2X-Antenne (2) gegen die umgebogenen Ränder (12) zurückzudrücken.

9. Fahrzeug nach Anspruch 8, **dadurch gekennzeichnet, dass** die Befestigungslasche (16, 17) ein Einhakende (18) aufweist, das dazu bestimmt ist, die V2X-Antenne (2) zwischen den zwei Gleitschienen (9, 10) zu halten.

10. Montageverfahren einer V2X-Antenne (2) für die Herstellung eines Fahrzeugs (1) gemäß Anspruch 9, **dadurch gekennzeichnet, dass** es die folgenden Schritte enthält:
- einen Schritt der Bereitstellung eines Fahrzeugs (1) gemäß Anspruch 9, mit Ausnahme der Tatsache, dass die V2X-Antenne (2) und der Spoiler (6) sich in einem noch nicht montierten Zustand befinden,
- einen Schritt des Gleitens der V2X-Antenne (2) zwischen den zwei Gleitschienen (9, 10) des Futters (8), was zu einer elastischen Verformung der Befestigungslasche (16, 17) führt,
- einen Schritt des Fortsetzens und dann des Stoppens des Gleitens, wenn die V2X-Antenne (2) das Einhakende (18) der Befestigungslasche (16, 17) überwunden hat, wobei das Ende (18) sich dann durch Entspannung gegen die V2X-Antenne (2) umbiegt, um sie daran zu hindern, in Gegenrichtung zu gleiten, und um die Antenne (2) gegen die umgebogenen Ränder (12) der zwei Gleitschienen (9, 10) zu halten,
- einen Schritt der Befestigung des die V2X-Antenne (2) enthaltenden Spoilers (6) an der vorgesehenen Stelle am Fahrzeug (1).

## Claims

1. Vehicle (1) provided with a rear face (3) extending along a transverse axis Y of the vehicle, said rear face (3) comprising at least one V2X antenna (2), **characterized in that** said rear face (3) is bordered at at least one of its ends considered along said axis Y by a lateral aerodynamic deflector (6), and **in that** the at least one V2X antenna (2) is positioned in a free space provided between said aerodynamic deflector (6) and a structural element of the vehicle (1).

2. Vehicle according to Claim 1, **characterized in that** the deflector (6) is a part with a small thickness that is inscribed in a substantially vertical and longitudinal plane XZ of the vehicle.

3. Vehicle according to either one of Claims 1 and 2, **characterized in that** the V2X antenna (2) is oriented in the free space provided between the structural element and the aerodynamic deflector (6) so as to cover a region located behind the vehicle (1).

4. Vehicle according to any one of Claims 1 to 3, **characterized in that** the aerodynamic deflector (6) has a lining (8) fixed to an internal surface of the deflector (6), and **in that** the V2X antenna (2) is fixed to this lining (8).

5. Vehicle according to Claim 4, **characterized in that** the V2X antenna (2) is fixed to the lining (8) of the aerodynamic deflector (6) by being clip-fastened thereto.

6. Vehicle according to either one of Claims 4 and 5, **characterized in that** the lining (8) has two parallel slideways (9, 10), and **in that** the V2X antenna (2) is positioned between said two slideways (9, 10).

7. Vehicle according to Claim 6, **characterized in that** the two slideways (9, 10) each have a bent end edge (12) intended to come into contact with the V2X antenna (2) in order to hold it against the lining (8) once it has been positioned between said slideways (9, 10).

8. Vehicle according to Claim 7, **characterized in that** the lining (8) has at least one elastically deformable fixing tab (16, 17) extending between the two slideways, and **in that** the antenna (2) is positioned between the two slideways (9, 10) by being positioned between the two bent edges (12) and said at least one fixing tab (16, 17), said fixing tab (16, 17) tending, by relaxation, to push the V2X antenna (2) back against said bent edges (12) .

9. Vehicle according to Claim 8, **characterized in that** the fixing tab (16, 17) has a hooking end (18) intended to retain the V2X antenna (2) between the two slideways (9, 10) .

10. Method for mounting a V2X antenna (2) for the production of a vehicle (1) according to Claim 9, **characterized in that** it comprises the following steps:
- a step of providing a vehicle (1) according to Claim 9, with the exception that the V2X antenna (2) and the deflector (6) are in an as yet unmounted state,
- a step of sliding the V2X antenna (2) between the two slideways (9, 10) of the lining (8), causing elastic deformation of the fixing tab (16, 17),
- a step of continuing and then stopping the sliding when the V2X antenna (2) has passed beyond the hooking end (18) of the fixing tab (16, 17), said end (18) then flapping back against the V2X antenna (2) by relaxation, in order to prevent it from sliding in the opposite direction and to keep said antenna (2) against the bent edges (12) of the two slideways (9, 10),
- a step of fixing the deflector (6) comprising the V2X antenna (2) at the intended location on the vehicle (1) .
